# EUROPÄISCHE PATENTSCHRIFT

(11) **EP 2 064 095 B1**
(45) Veröffentlichungstag und Bekanntmachung des Hinweises auf die Patenterteilung: **01.02.2012**
(21) Anmeldenummer: 07787417.0
(22) Anmeldetag: 12.07.2007
(51) Int. Cl.: B60S 1/08, B21K 1/12

(54) **HECKSCHEIBENWISCHER MIT EINER ELEKTRISCHEN ANTRIEBSANORDNUNG FÜR KRAFTFAHRZEUGE**
REAR WINDSCREEN WIPER COMPRISING AN ELECTRIC DRIVE ASSEMBLY FOR MOTOR VEHICLES
ESSUIE-GLACE DE LUNETTE ARRIÈRE DOTÉ D'UN DISPOSITIF D'ENTRAÎNEMENT ÉLECTRIQUE POUR VÉHICULES AUTOMOBILES

(30) Priorität: 08.09.2006 DE 102006042321
(43) Veröffentlichungstag der Anmeldung: 03.06.2009
(73) Patentinhaber: Robert Bosch GmbH, 70442 Stuttgart (DE)
(72) Erfinder: LAUK, Detlef, 77871 Renchen (DE); HUESGES, Mario, 77830 Buehlertal (DE)
(86) Internationale Anmeldenummer: PCT/EP2007/057146
(87) Internationale Veröffentlichungsnummer: WO 2008/028712

(56) Entgegenhaltungen:
- EP-A2- 1 298 772
- WO-A-01/59906
- WO-A-02/05985

## Beschreibung

Die vorliegende Erfindung betrifft einen Heckscheibenwischer mit einer elektrischen Antriebsanordnung für Kraftfahrzeuge gemäß dem Oberbegriff des Anspruchs 1. Scheibenwischermotoren dieser Bauart sind beispielsweise für den Antrieb der Frontscheibenwischer bekannt.

### Stand der Technik

Gemäß der Offenbarung der Offenlegungsschrift DE 100 34 410 A1 ist aus einem benachbarten technischen Gebiet ein Verfahren zum Herstellen einer Welle einer Antriebsanordnung für den Verstellantrieb einer Fensterscheibe für ein Kraftfahrzeug bekannt. Mittels der hierin offenbarten Herstellung einer Ankerwelle eines elektromotorischen Antriebs für einen Verstellantrieb einer Fensterscheibe, bei dem mindestens an einer Stelle mittels Materialverdrängung eine Lageroberfläche zur Führung in einer Wellenlagerung angeformt wird, kann unabhängig vom Herstellungsprozess der Schnecke auf sehr einfache Weise eine Lageroberfläche zur Lagerung der Ankerwelle geschaffen werden. Das Rolllieren von Schnecken auf Antriebswellen bietet eine kostengünstige Möglichkeit der Schaffung einer derartigen Schnecke, weil der Werkstoff der Schnecke aus dem Ankerwellenwerkstoff besteht. Dabei ist prozessbedingt kein spanender Folgeprozess notwendig, und die Rollierung kann zur entgültigen Gestaltung der Schnecke verwendet werden.

Ferner weist der elektromotorische Antrieb eine Ankerwelle auf, welche sich mit einem gleichförmigen Durchmesser über die gesamte Länge erstreckt. Auf die Ankerwelle ist ein Ankerpaket aufgebracht, dessen Schnecke rolliert ist. Die Schnecke kann auch als Hohlschneckenelement auf den tragenden Abschnitt der Ankerwelle aufgepresst werden.

Ein gattungsgemäßer Heckscheibenwischer und ein gattungsgemäßes Verfahren zur Herstellung einer Antriebsanordnung für einen Heckscheibenwascher sind aus dem Dokument WO-A-02/05985 bekannt.

Eine gattungsgemäße elektrische Antriebsanordnung ist aus der Patentschrift DE 40 39 453 C2 bekannt. Die elektrische Antriebsanordnung ist zum Antrieb einer Scheibenwischeranlage eines Kraftfahrzeugs vorgesehen. Die Scheibenwischeranlage weist ein Motorgehäuse mit einem Lagerschild und eine Ankerwelle auf, welche mit Hilfe eines in dem Lagerschild gehaltenen Wälzlagers mit einem Innenring und einem Außenring drehbar gelagert ist. Die Ankerwelle stützt sich über radial vorspringende Schultern und insbesondere über in Ringnuten der Ankerwelle eingedrückte Sicherungsringe beiderseits axial am Innenring des Wälzlagers ab. Die Axialkräfte entstehen durch den Verzahnungseingriff der Schnecke im Schneckenrad zum Antrieb der Getriebeanordnung, so dass über die Sicherungsringe sowie über die radial vorspringenden Schultern die Axialkräfte in den Innenring des Wälzlagers eingeleitet werden können. Ferner ist zwischen dem Innenring und der Schulter der Ankerwelle ein Federelement eingefügt, das die Ankerwelle in Drehrichtung kraftschlüssig mit dem Innenring koppelt. Weiterhin befindet sich zwischen der Schnecke und dem Bereich, auf dem das Wälzlager auf die Ankerwelle aufgepresst ist, eine weitere Kontourierung in der Ankerwelle, welche mittels einer spanenden Bearbeitung eingebracht werden muss. Die Ankerwelle ist an ihrem getriebeseitigen Wellenende federnd axial am Getriebetopf abgestützt. Eine vormontierte Patrone ist zur Lagerung der Abstützung der Ankerwelle im Inneren des Getriebetopfes in Form eines abgedichteten Sackloches des Getriebetopfes vorgesehen. Dabei weist die Ankerwelle im Bereich der Lagerung einen geringeren Durchmesser auf als im Aufnahmebereich des Wälzlagers oder des Ankerpaketes. Somit umfasst die Ankerwelle eine Vielzahl von Durchmesserveränderungen, welche mittels aufwendiger Fertigungsverfahren spanend hergestellt werden müssen. Ferner erfordert die Anordnung des Wälzlagers Ringnuten zur Aufnahme von Sicherungsringen, welche ebenfalls spanend eingebracht werden müssen.

Die bekannten Ausführungen von Antriebsanordnungen, welche speziell für den Antrieb eines Heckscheibenwischers eines Kraftfahrzeuges vorgesehen sind, sind aus der Konstruktion von Antriebsanordnungen für den Antrieb von Frontscheibenwischern abgeleitet, und weisen ebenfalls sehr aufwendig ausgestaltete Ankerwellen auf. Diese sind häufig mit Durchmessersprüngen ausgebildet, um einerseits eine Biegesteifigkeit im Bereich der Lagerung und des Ankerpaketes zu ermöglichen, und andererseits kleine Kopfkreisdurchmesser der Schnecken zu realisieren. Diese können entweder rolliert oder als Hohlschneckenelemente ausgebildet sein, wobei die Hohlschneckenelemente jeweils einen vergleichsweise kleinen Bohrungsdurchmesser haben, so dass ein Wellendurchmesser von beispielsweise 8mm im Bereich der Lagerungen und dem Ankerpaket zur Aufnahme der Hohlschneckeelemente nicht passend ist. Dies macht mehrere Durchmessersprüngen innerhalb einer Ankerwelle erforderlich, was eine aufwendige spanende Bearbeitung notwendig macht.

Ferner sind im Stand der Technik Nuten und Stufensprünge innerhalb der Welle zur Aufnahme der Axialkräfte vorgesehen, welche ebenfalls ein spanende Bearbeitung benötigen. Aufgrund der beim Antrieb eines Heckscheibenwischers auftretenden großen Kräfte sind derartige elektrische Antriebsanordnungen meist überdimensioniert. Es ist zwar eine Verkleinerung derartiger Antriebsanordnungen zur Integration in der Heckklappe bzw. im Heckbereich des Fahrzeuges bekannt, jedoch führen derartige Modifikationen häufig zu fertigungstechnisch aufwendigen Ausgestaltungen von Ankerwellen.

Es ist daher die Aufgabe der vorliegenden Erfindung, eine elektrische Antriebsanordnung für den Antrieb eines Heckscheibenwischers eines Kraftfahrzeugs mit einer Ankerwelle zu schaffen, die eine einfache konstruktive Ausgestaltung erlaubt und mit einer geringeren Anzahl von Fertigungsschritten herstellbar ist.

### Offenbarung der Erfindung

Diese Aufgabe wird ausgehend von einer elektrischen Antriebsanordnung für den Antrieb eines Heckscheibenwischers eines Kraftfahrzeuges gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass die Ankerwelle aus einem Stangenmaterial hergestellt ist, welches einen über der Länge der Ankerwelle gleichförmigen Nenndurchmesser zwischen 5 mm und 7 mm, bevorzugt zwischen 5,5 mm und 6,5 mm aufweist, wobei die Ankerwelle zum reibschlüssigen Fügen der Schnecke und/oder des Wälzlagers und/oder des Ankerpaketes wenigstens eine Rollierung aufweist.

Die Erfindung geht dabei von dem Gedanken aus, die Ankerwelle zunächst aus einem Stangenmaterial herzustellen. Das Stangenmaterial weist dabei einen gleichförmigen Nenndurchmesser zwischen 5 und 7 mm auf, so dass die Ankerwelle über ihre gesamte sich durch die Antriebsanordnung erstreckende Länge gleichbleibend ist. Der Nenndurchmesser beschreibt dabei einen Durchmesser, welcher im gewöhnlichen Toleranzbereich der Fertigung von handelsüblichem Stangenmaterial liegt. Bevorzugt ist ein Durchmesser von 6 mm vorgesehen, wobei dieser aber im Sinne des Schutzumfanges auch 0,5 mm oder mehr nach unten oder nach oben abweichen kann. Der bevorzugte Durchmesser von 6 mm beschreibt einen gewöhnlichen Toleranzbereich mit einer üblichen Toleranzfeldbreite für Toleranzen gemäß der DIN-ISO.

Ein wesentlicher Vorteil der erfindungsgemäß Antriebsanordnung liegt in der erzielten Vereinfachung des Herstellungsverfahrens der Ankerwelle aus einem gleichförmigen Stangenmaterial, welche durchgangsgeschliffen ist. Durchgangsgeschliffene Stangenmaterialien weisen gleichbleibende Oberflächenqualitäten auf, welche hinreichend sind, um beispielsweise ein Wälzlager oder beispielsweise ein Ankerpaket aufzupressen. Derartige durchgangsgeschliffene Stangenmaterialien umfassen als Halbzeug sehr große Längen, so dass das Stangenmaterial zur Herstellung der Ankerwelle auf die erforderliche Länge zugeschnitten werden muss, wobei die Oberfläche mittels eines kontinuierlichen Durchgangsschleifverfahrens hergestellt ist. Das Ablängen umfasst lediglich einen Trennvorgang des Stangenmaterials in Längsrichtung der Ankerwelle, wobei eine kurze nachfolgende Bearbeitung der Enden des Stangenmaterials zur Bildung der Ankerwelle erforderlich sein kann. Derartige Materialien stehen überdies als Vergütungsstahl zur Verfügung, so dass mittels einer einfachen totalen oder lokalen Wärmebehandlung auch im weiteren Fertigungsverlauf der Ankerwelle Bereiche mit unterschiedlichen Härtegraden erzielbar sind.

Erfindungsgemäß ist vorgesehen, dass die Schnecke auf das durchgangsgeschliffene Stangenmaterial rolliert ist. Das Rollieren von Schnecken auf Wellen ist eine sehr kostengünstige Fertigungsmöglichkeit. Zwei sich gegenüberstehende Formwerkzeuge werden dabei in das Stangenmaterial bzw. die gebildete Ankerwelle eingedrückt, wodurch das Material im Umformverfahren mittels einer plastischen Formänderung derart bearbeitet wird, dass die Kontur der Schnecke durch das Stangenmaterial selbst gebildet werden kann.

Ein weitere Ausführungsform sieht vor, die Schnecke als Hohlschneckenelement auszubilden, welches auf der Ankerwelle aufgesetzt ist, wobei die Ankerwelle im Bereich des Hohlschneckenelementes rolliert ist.

Vorteilhafterweise weist das Hohlschneckenelement eine Bohrung zur Aufnahme des durchgangsgeschliffenen Stangenmaterials auf. Somit ist außer des Rollierens zur Aufnahme des Hohlschneckenelementes kein weiterer Bearbeitungsschritt zur Fertigung des Stangenmaterials erforderlich. Lediglich zwischen dem Durchmesser der Bohrung des Hohlschneckenelementes und dem Durchmesser des durchgangsgeschliffenen Stangenmaterials kann eine Toleranzpaarung vorgesehen sein, um das Hohlschneckenelement auf vorteilhafte Weise auf die Ankerwelle aufzupressen und dazu eine reibschlüssige Verbindung herzustellen. Es ist nicht dabei nicht notwendig, die Ankerwelle im Bereich der Aufnahme des Hohlschneckenelementes im Durchmesser zu verändern. Gewöhnliche Hohlschneckenelemente weisen in einem Ausführungsbeispiel einen Schneckenfußdurchmesser auf, welcher mit einer 6mm-Bohrung für den Einsatz in eine Antriebsanordnung für den Antrieb eines Heckscheibenwischers eines Kraftfahrzeugs eingesetzt werden kann.

Erfindungsgemäß weist die Ankerwelle in wenigstens einem sich seitlich zum Wälzlager erstreckenden Bereich eine Rollierung auf. Der Nenndurchmessers des durchgangsgeschliffenen Stangenmaterials und der Bohrungsdurchmesser des Wälzlagers können eine Toleranzpaarung ergeben, so dass das Wälzlager auf die Ankerwelle aufgepresst werden kann. Der Pressverband kann durch eine vorherige Rollierung der Ankerwelle an dem Berührungsbereich des Wälzlagers verstärkt werden, so dass Axialkräfte, welche über die Schnecke in die Ankerwelle eingeleitet werden, mittels des Wälzlagers aufgenommen werden können, und die Ankerwelle durch das Wälzlager in Axialrichtung abgestützt wird. Ferner besteht zur Unterstützung der axialen Fixierung des Wälzlagers auf der Ankerwelle die Möglichkeit, seitlich, d.h. links und rechts vom Wälzlager eine Rollierung vorzunehmen, wodurch eine Schulter mit einem Durchmesser entsteht, welcher geringfügig größer ist als der Nenndurchmesser, so dass das Wälzlager axial gesichert wird.

Alternativ zu der Ausbildung einer Schulter kann durch das Rollieren der Oberfläche der Ankerwelle mittels einer plastischen Verformung eine Struktur eingewalzt werden, welche Erhebungen aufweist, die ebenfalls über den Nenndurchmesser von 6mm hinausgehen, so dass auch hierdurch eine formschlüssige axiale Sicherung des Wälzlagers auf der Ankerwelle erzielbar ist.

Ebenfalls besteht die Möglichkeit, die Ankerwelle im Bereich des Wälzlagers vor dem Aufschieben des Wälzlagers mittels Rollierens aufzurauen bzw. derart geringfügig plastisch zu verformen, dass bei einem anschließenden Aufschieben des Wälzlagers dieses eine erhöhte Pressung auf der Ankerwelle aufweist, so dass auch dadurch eine erhöhte Sicherheit gegen ein axiales Verschieben des Wälzlagers auf der Ankerwelle erzielbar ist.

Gemäß der vorliegenden Erfindung ist vorgesehen, auf die Ankerwelle ein Ankerpaket aufzupressen, wobei der das Ankerpaket aufnehmende Abschnitt der Ankerwelle zumindest teilweise einen Oberflächenstrukturbereich aufweist, der eine erhöhte Reibung zwischen der Ankerwelle und dem Ankerpaket bereitstellt. Der Oberflächenstrukturbereich wird dabei erfindungsgemäß mit einer Rollierung bearbeitet sein.

Der Oberflächenstrukturbereich kann auch mittels einer Rändelung oder einer sonstigen plastischen Verformung der Oberfläche in einem Teilbereich der Ankerwelle versehen werden, wobei das Ankerpaket anschließend auf die Ankerwelle aufgesetzt wird. Auch hier sei angemerkt, dass das Ankerpaket auch ohne eine Veränderung der Oberfläche zur Bildung eines Oberflächenstrukturbereichs mittels einer Presspassung oder eines Stoffschlusses wie beispielsweise mittels eines Klebstoffes oder ähnlichem an der Ankerwelle angebracht werden kann.

Die Schnecke, das Wälzlager und das Ankerpaket sind mit konstruktiv minimalen Abständen zueinander auf der Ankerwelle angeordnet, um Biegemomente zu minimieren, so dass der Nenndurchmesser von 6 mm hinsichtlich der Biegesteifigkeit der Ankerwelle ausreichend ist. Mögliche Formänderungen der Ankerwelle durch das Rollieren können mittels eines Richtens der Welle ausgeglichen werden, wobei die Stärke der Rollierung derart klein gehalten werden kann, dass ein Verzug der Ankerwelle nicht in Erscheinung tritt.

Gemäß eines weiteren Ausführungsbeispiels der Erfindung kann die Ankerwelle an wenigstens einer weiteren Lagerstelle in einem Gleitlager gelagert sein, welches ebenfalls einen Nenndurchmesser von 6 mm aufweist. Somit kann die Ankerwelle von den Aufnahmebereichen der Schnecke, des Wälzlagers sowie des Ankerpaketes direkt in einen Bereich eines Gleitlagers übergehen, ohne dass eine spanende Bearbeitung erforderlich ist. Dabei sei erwähnt, dass das Gleitlager sowohl durch die Ankerwelle selbst gebildet sein kann. Es besteht auch die Möglichkeit, einen Gleitlagerinnenring auf die Welle aufzupressen.

Die vorliegende Erfindung umfasst ferner ein Verfahren zur Herstellung einer elektrischen Antriebsanordnung für den Antrieb eines Heckscheibenwischers eines Kraftfahrzeuges mit einer Ankerwelle, welche in wenigstens einem Wälzlager gelagert ist und ferner eine Schnecke zum Antrieb einer Getriebeanordnung umfasst, wobei das Verfahren die Schritte des Herstellens der Ankerwelle durch Ablängen eines durchgangsgeschliffenen Stangenmaterials, das Rollieren der Ankerwelle an den für die Aufnahme der Komponenten vorgesehenen Stellen, das Anbringen der Schnecke an und/oder in die Ankerwelle, das Aufpressen des Wälzlagers auf die Ankerwelle und das Aufschieben des Ankerpaketes umfasst. Das Anbringen der Schnecke umfasst entweder ein Rollieren der Schnecke auf die Ankerwelle oder das Aufpressen eines Hohlschneckenelementes auf die Ankerwelle. Ferner kann das Verfahren nach dem Aufbringen des Wälzlagers an wenigstens einem sich seitlich zum Wälzlager erstreckenden Bereich ein Rollieren umfassen, um die axiale Sicherung des Wälzlagers auf der Ankerwelle zu bewirken.

Weitere, die Erfindung verbessernde Maßnahmen werden nachstehend gemeinsam mit der Beschreibung eines bevorzugten Ausführungsbeispiels der Erfindung anhand der Figur näher dargestellt.

### Ausführungsbeispiel

Es zeigt:
- Figur 1: eine schematische Darstellung einer Ankerwelle gemäß der vorliegenden Erfindung, wobei die Schnecke als Hohlschneckenelement ausgeführt ist;
- Figur 2: eine schematische Darstellung der Ankerwelle gemäß der vorliegenden Erfindung, wobei die Schnecke durch ein Rollieren hergestellt ist; und
- Figur 3: eine Ankerwelle gemäß dem Stand der Technik.

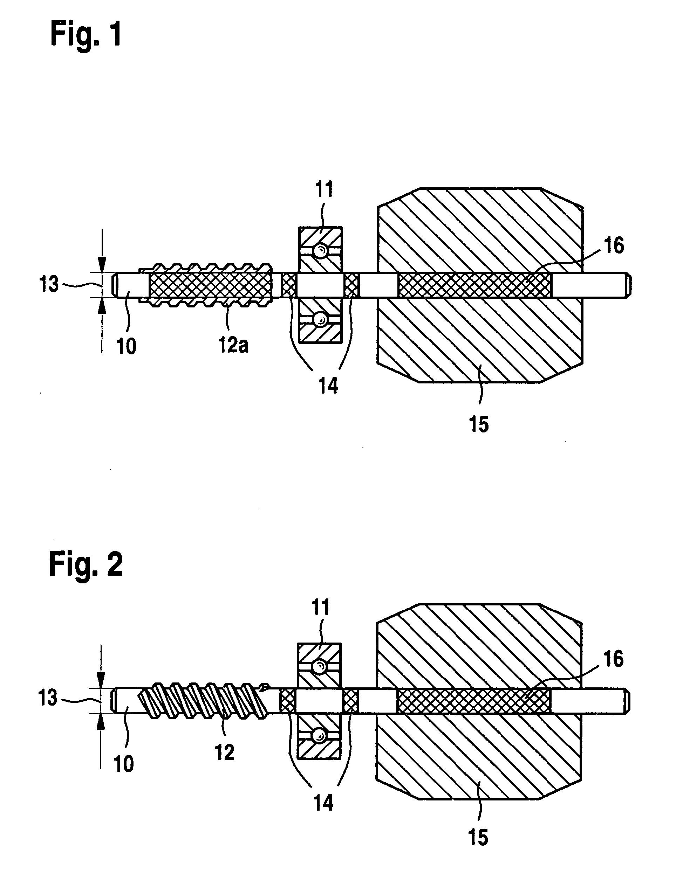

Figur 1 zeigt eine schematische Darstellung einer Ankerwelle 10, welche ein verbesserte Ausgestaltung gemäß der vorliegenden Erfindung aufweist. Die Ankerwelle 10 ist aus einem durchgangsgeschliffenen Stangenmaterial hergestellt und weist in diesem Ausführungsbeispiel über ihre gesamten Länge einen konstanten Nenndurchmesser 13 von ca.. 6 mm auf. Der Durchmesser der Ankerwelle 10 kann aber auch je nach Ausführungsform aus dem Bereich zwischen 5 mm und 7 mm, bevorzugt 5,5 mm und 6,5 mm gewählt werden. Der Innendurchmesser der Schnecke 12, welche als Hohlschneckenelement 12 ausgebildet ist, beträgt in diesem Ausführungsbeispiel ebenfalls ca. 6 mm. Das Hohlschneckenelement 12 ist auf die Ankerwelle 10 aufgepresst, so dass eine reibschlüssige Verbindung zwischen dem Hohlschneckenelement 12 und der Ankerwelle 10 vorliegt. Zur Verstärkung des Pressverbandes zwischen dem Hohlschneckenelement 12 und der Ankerwelle 10 ist die Ankerwelle 10 im Bereich des Hohlschneckenelementes 12 rolliert.

Ein Wälzlager 11 ist auf der Ankerwelle 10 aufgeschoben und mittels einer Pressung axialfest auf der Ankerwelle 10 befestigt. Wie auch bei dem Hohlschneckenelement 12 weist das Wälzlager 11 eine Bohrung mit einem Nenndurchmesser von 6mm auf. Um die Sicherheit gegen ein axiales Verschieben des Wälzlagers 11 gegenüber der Ankerwelle 10 zu gewährleisten, ist der sich linksseitig und rechtsseitig vom Wälzlager 11 erstreckende Bereich der Ankerwelle 10 mit einer jeweiligen Rollierung 14 versehen. Mittels der Rollierung 14 wird eine plastische Verformung des Materials der Ankerwelle 10 erzeugt, durch die in diesem Ausführungsbeispiel eine Schulter gebildet wird, gegen die sich das Wälzlager 11 abstützt. Dadurch können sämtliche innerhalb der Ankerwelle 10 auftretenden Axialkräfte durch das Wälzlager 11 aufgenommen werden. Das Wälzlager 11 ist hier nach Art eines Kugellagers ausgeführt.

Die Rollierung erfolgt mittels eines Formwerkzeuges, welches radial an die Ankerwelle 10 angedrückt wird, währenddessen diese in Rotation versetzt ist. Das Prinzip des Rollierens beruht auf einer plastischen Verformung der Oberfläche des Stangenmaterials der Ankerwelle 10, wobei entweder eine Rändelung mit einer Berg-Tal-Struktur erzeugt werden kann, oder mittels eines Formwerkzeugs ein seitlicher Schulterrand in die Ankerwelle 10 eingebracht wird.

Ebenso ist ein Oberflächenstrukturbereich 16 dargestellt, welcher zur reibschlüssigen Aufnahme des Ankerpaketes 15 dient. Das Ankerpaket 15 wird auf die Ankerwelle 10 axial aufgepresst und ist in diesem Ausführungsbeispiel lediglich schematisch dargestellt. Es umfasst einen metallischen Anker mit einer Wicklung sowie einem Kollektor, welcher mittels Kohlebürsten elektrisch gespeist und kommutiert wird.

Figur 2 zeigt eine schematische Darstellung der Ankerwelle 10 gemäß Figur 1, wobei jedoch die Schnecke 12 mittels einer Rollierung in die Ankerwelle 10 eingebracht ist. Das Formwerkzeug zur Erzeugung der Schnecke 12 umfasst ein Negativ der Schneckenkontur, so dass die Schnecke 12 aus dem Material der Ankerwelle 10 selbst gebildet ist. Wie auch in Figur 1 umfasst die Darstellung der Ankerwelle 10 in Figur 2 ein Ankerpaket 15, welches mittels eines Oberflächenstrukturbereiches 16 reibschlüssig auf der Ankerwelle 10 aufgebracht ist. Auch in diesem Ausführungsbeispiel beträgt der Nenndurchmesser 13 6mm und ersterckt sich über der gesamten Länge der Ankerwelle 10. Das Wälzlager 11 ist mittels einer linksseitigen sowie rechtsseitigen Rollierung 14 axial an der Ankerwelle 10 gesichert.

Fertigungstechnisch kann zunächst die Rollierung der Schnecke 12 erfolgen, um unter anderem eventuelle Maßabweichungen innerhalb der Formtoleranz der Ankerwelle 10 auszugleichen. Zusätzlich kann eine Wärmebehandlung zumindest des Rollierbereiches der Schnecke 12 vorgesehen sein. Alternativ besteht die Möglichkeit, die Schnecke 12 mittels eines Kaltfließpressverfahrens herzustellen, durch welches ebenfalls entsprechende Materialhärten erzielbar sind.

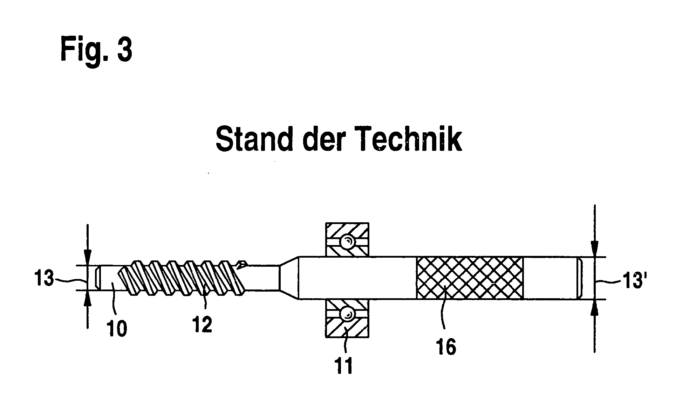

Figur 3 zeigt eine Ankerwelle 10 mit einem Nenndurchmesser gemäß dem Stand der Technik. An der Ankerwelle 10 ist eine Schnecke befestigt. Die Ankerwelle 10 weist keinen sich über die gesamte Länge erstreckenden Nenndurchmesser wie in den erfindungsgemäßen Ausführungsbeispielen auf sondern eine Aufweitung auf einen weiteren in diesem Fall größeren Nenndurchmesser 13'. An dem Nenndurchmesser 13' ist ein Wälzlager 11 a sowie ein Oberflächenstrukturbereich 16a zur Aufnahme des hier nicht weiter dargestellten Ankerpaketes vorgesehen. Die Herstellung der Ankerwelle 10 erfordert einen erheblichen Fertigungsaufwand, da unterschiedliche Durchmesserbereiche mittels eines spanenden Fertigungsverfahrens hergestellt werden müssen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Heckscheibenwischer mit einer elektrischen Antriebsanordnung insbesondere für ein Kraftfahrzeug mit einer Ankerwelle (10) und einem Ankerpaket (15), wobei die Ankerwelle (10) mittels wenigstens eines Wälzlagers (11) gelagert ist und eine Schnecke (12) zum Antrieb einer Getriebeanordnung umfasst,
**dadurch gekennzeichnet, dass** die Ankerwelle (10) aus einem Stangenmaterial hergestellt ist, welches einen über der Länge der Ankerwelle (10) gleichförmigen konstanten Nenndurchmesser (13) zwischen 5 mm und 7 mm, bevorzugt 5,5 mm und 6,5 mm aufweist, wobei die Ankerwelle (10) zur reibschlüssigen Verbindung der Schnecke (12) und/oder des Wälzlagers (11) und/oder des Ankerpaketes (15) mehrere Rollierungen (14) aufweist, und an wenigstens einem sich seitlich zum Wälzlager (11) erstreckenden Bereich derart rolliert ist, dass das Wälzlager (11) im Bereich der Rollierung der Ankerwelle (10) axialfest mit der Ankerwelle (10) verbunden ist.

2. Heckscheibenwischer mit einer elektrischen Antriebsanordnung nach Anspruch 1,
**dadurch gekennzeichnet, dass** die Ankerwelle (10) durchgangsgeschliffen ist.

3. Heckscheibenwischer mit einer elektrischen Antriebsanordnung nach Anspruch 1 oder 2,
**dadurch gekennzeichnet, dass** die Schnecke (12) einteilig mit der Ankerwelle (10) ausgebildet, insbesondere aus der Ankerwelle (10) rolliert ist.

4. Heckscheibenwischer mit einer elektrischen Antriebsanordnung nach Anspruch 1 oder 2,
**dadurch gekennzeichnet, dass** die Schnecke (12) als Hohlschneckenelement (12a) ausgebildet ist, welches an der Ankerwelle (10) befestigt ist.

5. Heckscheibenwischer mit einer elektrischen Antriebsanordnung nach Anspruch 4,
**dadurch gekennzeichnet, dass** das Hohlschneckenelement (12a) eine Bohrung zur Aufnahme der Ankerwelle (10) aufweist, welche komplementär zum Nenndurchmesser (13) ausgebildet ist.

6. Heckscheibenwischer mit einer elektrischen Antriebsanordnung nach einem der vorhergehenden Ansprüche,
**dadurch gekennzeichnet, dass** die Ankerwelle (10) in wenigstens einem sich seitlich zum Wälzlager (11) erstreckenden Bereich eine Rollierung (14) aufweist.

7. Heckscheibenwischer mit einer elektrischen Antriebsanordnung nach einem der vorgenannten Ansprüche,
**dadurch gekennzeichnet, dass** die Ankerwelle (10) an wenigstens einer weiteren Lagerstelle mittels eines Gleitlagers gelagert ist, welches einen Durchmesser komplementär zum Nenndurchmesser (13) aufweist.

8. Verfahren zur Herstellung einer elektrischen Antriebsanordnung für einen Heckscheibenwischer eines Kraftfahrzeuges, **gekennzeichnet, durch** die folgenden Schritte:
- Herstellen einer Ankerwelle (10) **durch** Ablängen eines insbesondere durchgangsgeschliffenen Stangenmaterials mit einem durchgehend konstanten Nenndurchmesser;
- Zumindest bereichsweise Rollieren der Ankerwelle (10);
- Anbringen einer Schnecke (12) auf und /oder in die Ankerwelle (10);
- Aufpressen eines Wälzlagers (11) auf die Ankerwelle (10), wobei die Ankerwelle (10) nach dem Aufbringen des Wälzlagers (11) an wenigstens einem sich seitlich zum Wälzlager (11) erstreckenden Bereich rolliert wird, um das Wälzlager axial zu fixieren; und
- Aufschieben eines Ankerpaketes (15);

9. Verfahren nach Anspruch 8,
**dadurch gekennzeichnet, dass** die Schnecke (12) einteilig mit der Ankerwelle ausgebildet wird, indem sie mittels Rollierens in die Ankerwelle (10) eingebracht wird.

## Claims

1. Rear windscreen wiper comprising an electric drive assembly, in particular for a motor vehicle, with an armature shaft (10) and an armature assembly (15), wherein the armature shaft (10) is mounted by means of at least one rolling contact bearing (11) and comprises a worm (12) for driving a gearing arrangement, **characterized in that** the armature shaft (10) is produced from a bar stock which has a constant nominal diameter (13) of between 5 mm and 7 mm, preferably 5.5 mm and 6.5 mm, which is uniform over the length of the armature shaft (10), the armature shaft (10) having a plurality of roller-burnished portions (14) for connecting the worm (12) and/or the rolling contact bearing (11) and/or the armature assembly (15) in a frictionally engaged manner and being roller-burnished on at least one region extending laterally with respect to the rolling contact bearing (11) in such a manner that the rolling contact bearing (11) is connected in an axially fixed manner to the armature shaft (10) in the region of the roller-burnished portion of the armature shaft (10).

2. Rear windscreen wiper comprising an electric drive assembly according to Claim 1, **characterized in that** the armature shaft (10) is through-ground.

3. Rear windscreen wiper comprising an electric drive assembly according to Claim 1 or 2, **characterized in that** the worm (12) is formed integrally with the armature shaft (10), in particular is roller-burnished from the armature shaft (10).

4. Rear windscreen wiper comprising an electric drive assembly according to Claim 1 or 2, **characterized in that** the worm (12) is designed as a hollow worm element (12a) which is fastened to the armature shaft (10).

5. Rear windscreen wiper comprising an electric drive assembly according to Claim 4, **characterized in that** the hollow worm element (12a) has a bore for receiving the armature shaft (10), the bore being designed so as to be complementary to the nominal diameter (13).

6. Rear windscreen wiper comprising an electric drive assembly according to one of the preceding claims, **characterized in that** the armature shaft (10) has a roller-burnished portion (14) in at least one region extending laterally with respect to the rolling contact bearing (11).

7. Rear windscreen wiper comprising an electric drive assembly according to one of the preceding claims, **characterized in that** the armature shaft (10) is mounted on at least one further bearing point by means of a plain bearing which has a diameter which is complementary to the nominal diameter (13).

8. Method for producing an electric drive assembly for a rear windscreen wiper of a motor vehicle, **characterized by** the following steps:
- producing an armature shaft (10) by cutting an in particular through-ground bar stock having a continuously constant nominal diameter to length;
- roller-burnishing at least regions of the armature shaft (10);
- mounting a worm (12) on and/or into the armature shaft (10);
- pressing a rolling contact bearing (11) onto the armature shaft (10), the armature shaft (10), after the roller contact bearing (11) has been fitted, being roller-burnished on at least one region extending laterally with respect to the rolling contact bearing (11), in order to axially fix the roller contact bearing; and
- pushing an armature assembly (15) on.

9. Method according to Claim 8, **characterized in that** the worm (12) is formed integrally with the armature shaft by being introduced into the armature shaft (10) by means of roller-burnishing.

## Revendications

1. Essuie-glace de lunette arrière comprenant un agencement d'entraînement électrique, en particulier pour un véhicule automobile, avec un arbre d'induit (10) et un noyau feuilleté d'induit (15), l'arbre d'induit (10) étant supporté au moyen d'au moins un palier à roulement (11) et comprenant une vis sans fin (12) pour l'entraînement d'un agencement de transmission,
**caractérisé en ce que** l'arbre d'induit (10) est constitué d'un matériau en barre qui présente un diamètre nominal (13) constant uniforme sur la longueur de l'arbre d'induit (10), compris entre 5 mm et 7 mm, de préférence entre 5,5 mm et 6,5 mm, l'arbre d'induit (10), pour la connexion par engagement par friction de la vis sans fin (12) et/ou du palier à roulement (11) et/ou du noyau feuilleté d'induit (15), présentant plusieurs écrouissages (14), et sur au moins une région s'étendant latéralement par rapport au palier à roulement (11) étant laminé de telle sorte que le palier à roulement (11) soit connecté dans la région de l'écrouissage de l'arbre d'induit (10) de manière axialement solidaire à l'arbre d'induit (10).

2. Essuie-glace de lunette arrière comprenant un agencement d'entraînement électrique selon la revendication 1, **caractérisé en ce que** l'arbre d'induit (10) est meulé en une passe.

3. Essuie-glace de lunette arrière comprenant un agencement d'entraînement électrique selon la revendication 1 ou 2,
**caractérisé en ce que** la vis sans fin (12) est réalisée d'une seule pièce avec l'arbre d'induit (10), notamment est laminée à partir de l'arbre d'induit (10).

4. Essuie-glace de lunette arrière comprenant un agencement d'entraînement électrique selon la revendication 1 ou 2,
**caractérisé en ce que** la vis sans fin (12) est réalisée sous forme d'élément de vis sans fin creux (12a), qui est fixé sur l'arbre d'induit (10).

5. Essuie-glace de lunette arrière comprenant un agencement d'entraînement électrique selon la revendication 4, **caractérisé en ce que** l'élément de vis sans fin creux (12a) présente un alésage pour recevoir l'arbre d'induit (10), qui est réalisé de manière complémentaire au diamètre nominal (13).

6. Essuie-glace de lunette arrière comprenant un agencement d'entraînement électrique selon l'une quelconque des revendications précédentes,
**caractérisé en ce que** l'arbre d'induit (10) présente, dans au moins une région s'étendant latéralement par rapport au palier à roulement (11), un écrouissage (14).

7. Essuie-glace de lunette arrière comprenant un agencement d'entraînement électrique selon l'une quelconque des revendications précédentes,
**caractérisé en ce que** l'arbre d'induit (10) est supporté en au moins un autre point de palier au moyen d'un palier lisse, qui présente un diamètre complémentaire au diamètre nominal (13).

8. Procédé de fabrication d'un agencement d'entraînement électrique pour un essuie-glace de lunette arrière d'un véhicule automobile, **caractérisé par** les étapes suivantes :
- fabrication d'un arbre d'induit (10) par découpage à la longueur d'un matériau en barre notamment meulé en une passe, avec un diamètre nominal constant en continu ;
- écrouissage au moins en partie de l'arbre d'induit (10) ;
- montage d'une vis sans fin (12) sur et/ou dans l'arbre d'induit (10) ;
- pressage d'un palier à roulement (11) sur l'arbre d'induit (10), l'arbre d'induit (10) étant écroui après le montage du palier à roulement (11) au niveau d'au moins une région s'étendant latéralement par rapport au palier à roulement (11), afin de fixer axialement le palier à roulement ; et
- enfoncement d'un noyau feuilleté d'induit (15).

9. Procédé selon la revendication 8,
**caractérisé en ce que**
la vis sans fin (12) est réalisée d'une seule pièce avec l'arbre d'induit, en étant incorporée au moyen d'un écrouissage dans l'arbre d'induit (10).
